# FASCICULE DE BREVET EUROPEEN

(11) **EP 2 060 750 B1**
(45) Date de publication et mention de la délivrance du brevet: **16.05.2012**
(21) Numéro de dépôt: 08166945.9
(22) Date de dépôt: 17.10.2008
(51) Int. Cl.: F01D 25/24

(54) **Etage de turbine ou de compresseur, en particulier de turbomachine**
Turbinen- oder Kompressorstufe, insbesondere eines Turbotriebwerks
Stage of a turbine or compressor, in particular of a turbomachine

(30) Priorité: 13.11.2007 FR 0707946
(43) Date de publication de la demande: 20.05.2009
(73) Titulaire: Snecma, 75015 Paris (FR)
(72) Inventeur: Audeon, David, 91300, Massy (FR); Da Silva, David, 91260, Juvisy-sur-Orge (FR)
(74) Mandataire: Ramey, Daniel

(56) Documents cités:
- EP-A- 0 907 053
- EP-A- 1 099 826
- EP-A- 1 840 339
- FR-A- 2 887 920
- US-A- 5 848 854
- US-A1- 2006 216 146

## Description

La présente invention concerne un étage de turbine ou de compresseur, en particulier dans une turbomachine telle qu'un turboréacteur ou un turbopropulseur d'avion, comportant un disque aubagé tournant à l'intérieur d'un anneau cylindrique ou tronconique formé par des secteurs d'anneau accrochés circonférentiellement bout à bout sur un carter du compresseur ou de la turbine.

Chaque secteur d'anneau comprend à une de ses extrémités un rebord circonférentiel qui est radialement serré sur un rail annulaire du carter par l'intermédiaire d'un verrou élastique à section sensiblement en C qui est engagé axialement sur le rail de carter et sur le rebord circonférentiel du secteur d'anneau.

Le verrou est formé de deux parois parallèles à orientation circonférentielle, respectivement interne et externe, qui s'étendent l'une à l'intérieur de l'autre et qui sont reliées entre elles par une paroi sensiblement radiale. Les parois interne et externe du verrou comprennent des moyens d'appui radial sur le rebord du secteur d'anneau et sur le rail de carter, respectivement. Le verrou est engagé avec une certaine précontrainte radiale sur le rebord du secteur et sur le rail de carter. Au repos de la turbomachine, les parois interne et externe du verrou sont en appui radial sur le rebord du secteur d'anneau et sur le rail de carter sur sensiblement toute la largeur ou étendue angulaire du verrou.

En fonctionnement, il apparaît un gradient de température relativement important en direction radiale dans chaque secteur d'anneau, ce qui entraîne un « décambrage » de ce secteur d'anneau. Ce phénomène se traduit notamment par une augmentation du rayon de courbure du secteur d'anneau, ce qui réduit les surfaces d'appui radial entre les parois du verrou et lé rebord du secteur et le rail de carter. On a constaté que les zones d'appui entre ces pièces étaient essentiellement localisées entre les parties d'extrémité de la paroi externe du verrou et le rail de carter, et entre la partie médiane de la paroi interne du verrou et le secteur d'anneau. Les efforts transmis par le secteur d'anneau et le rail de carter transitent par ces zones d'appui qui ne sont pas optimisées et qui forment donc des zones de concentration de contraintes pouvant réduire la durée de vie du verrou.

Le document US-A-2006/0216146 décrit un anneau externe sectorisé pour un rotor de turbomachine, qui est fixé sur un carter au moyen d'un organe d'étanchéité en arc de cercle.

Le document EP-A2-0 907 053 décrit un appareil de fixation d'une couronne de séparation de deux foyers de combustion concentriques dans une chambre de combustion de turbomachine.

L'invention a notamment pour but d'apporter une solution simple, efficace et économique au problème précité.

Elle propose à cet effet un étage de turbine ou de compresseur, en particulier de turbomachine, comprenant au moins un disque aubagé entouré par un anneau sectorisé porté par un carter et comprenant un rebord circonférentiel radialement serré sur un rail annulaire du carter par des verrous à section sensiblement en C qui sont engagés axialement sur le rail de carter et sur le rebord de l'anneau, chaque verrou comportant deux parois parallèles à orientation circonférentielle respectivement interne et externe reliées l'une à l'autre par une paroi radiale, les parois interne et externe du verrou comprenant des moyens d'appui radial respectivement sur le rebord de l'anneau et sur le rail de carter, caractérisé en ce que ces moyens d'appui s'étendent sur une partie seulement de la largeur ou de l'étendue angulaire des parois interne et externe du verrou.

Selon l'invention, les moyens d'appui radial du verrou sont formés par des parties choisies des parois interne et externe du verrou, ces parties étant optimisées pour rester constamment en contact avec le carter ou le secteur d'anneau, et ce quel que soit le régime de fonctionnement de la turbomachine. Ces parties sont bien délimitées et sont conformées pour résister aux efforts transmis par le rail de carter et le rebord du secteur d'anneau en fonctionnement, ce qui permet d'augmenter la durée de vie du verrou.

Selon une autre caractéristique de l'invention, les parois interne et externe du verrou comprennent chacune au moins une partie de plus grande dimension en direction axiale et au moins une partie de plus petite dimension en direction axiale, la ou chaque partie de plus grande dimension comportant lesdits moyens d'appui radial.

Les parois interne et externe du verrou sont configurées pour bien dissocier les parties travaillantes (de plus grande dimension axiale) du verrou qui comportent les moyens d'appui radial et les parties non travaillantes (de plus faible dimension axiale) de ce verrou. Les parties de plus faible dimension axiale des parois du verrou sont par exemple formées par des échancrures de ces parois. Les échancrures sont par exemple formées par enlèvement de matière des parois interne et externe du verrou dans les endroits où il n'y a pas de transmission d'efforts et de zones de concentration de contraintes. La matière est donc mieux répartie dans les parois du verrou que dans la technique antérieure, ce qui permet notamment de réduire d'environ 20% la masse des verrous d'un étage de compresseur ou de turbine. Par ailleurs, cet enlèvement localisé de matière permet de modifier localement la rigidité du verrou et de l'adapter aux déformations du secteur d'anneau en fonctionnement.

La paroi interne et/ou la paroi externe du verrou comprend par exemple une partie médiane de plus faible dimension axiale et des parties d'extrémité de plus grande dimension axiale.

Lorsque les parois interne et externe du verrou comprennent chacune une partie médiane de plus faible dimension axiale et des parties d'extrémité de plus grande dimension axiale, la transmission des efforts entre les secteurs d'anneau et le verrou et entre le rail de carter et le verrou est localisée aux parties d'extrémités des parois interne et externe du verrou. La partie médiane de la paroi interne du verrou n'est donc pas en contact avec le rebord du secteur d'anneau qui est alors libre de se déplacer librement en direction radiale. Le verrou a donc dans ce cas une durée de vie plus importante.

En variante ou en caractéristique additionnelle, la paroi interne et/ou la paroi externe du verrou comprend une partie médiane de plus grande dimension axiale et des parties d'extrémité circonférentielle de plus petite dimension axiale.

Lorsque la paroi interne du verrou comprend une partie médiane de plus grande dimension axiale et des parties d'extrémité de plus petite dimension axiale, la partie médiane de cette paroi est conformée pour résister aux efforts importants transmis par le rebord du secteur d'anneau et pour limiter le décambrage de ce secteur. On observe alors de faibles variations des jeux radiaux entre les sommets des aubes du disque et les secteurs d'anneau, ce qui améliore les performances de la turbomachine.

La ou chaque partie de plus grande dimension axiale de chaque paroi du verrou peut avoir une largeur ou étendue angulaire qui représente environ la moitié, de préférence le tiers, et par exemple le quart, de celle du verrou.

L'invention concerne encore un compresseur ou une turbine de turbomachine, caractérisé(e) en ce qu'il ou elle comprend au moins un étage de turbine ou de compresseur tel que décrit ci-dessus.

L'invention concerne également une turbomachine, telle qu'un turboréacteur ou un turbopropulseur d'avion, caractérisée en ce qu'elle comprend au moins un étage de turbine ou de compresseur tel que décrit ci-dessus.

L'invention concerne enfin un verrou pour un étage de turbine ou de compresseur du type précité, comprenant deux parois parallèles à orientation circonférentielle, respectivement interne et externe, reliées l'une à l'autre à l'un de leurs bords circonférentiels par une troisième paroi sensiblement radiale de façon à ce que le verrou ait en section une forme sensiblement en C, caractérisé en ce que les parois interne et externe comprennent chacune au niveau de l'autre de leurs bords circonférentiels au moins une échancrure qui s'étend en direction circonférentielle sur une partie, et par exemple au moins un quart, de la largeur ou de l'étendue angulaire du verrou, les parties non échancrées de ces parois comportant des moyens d'appui radial.

L'invention sera mieux comprise et d'autres caractéristiques, détails et avantages de celle-ci apparaîtront plus clairement à la lecture de la description qui suit, faite à titre d'exemple non limitatif et en référence aux dessins annexés dans lesquels :
- la figure 1 est une demi-vue schématique partielle en coupe axiale d'un étage de turbine selon la technique antérieure ;
- la figure 2 est une vue schématique en perspective d'un verrou de l'étage de la figure 1 ;
- la figure 3 est une vue très schématique partielle de face d'un secteur d'anneau de la figure 1, vu de l'aval ;
- la figure 4 est une vue schématique en perspective d'un verrou selon la présente invention ;
- les figures 5 à 7 sont des vues schématiques en perspective de variantes de réalisation de l'invention

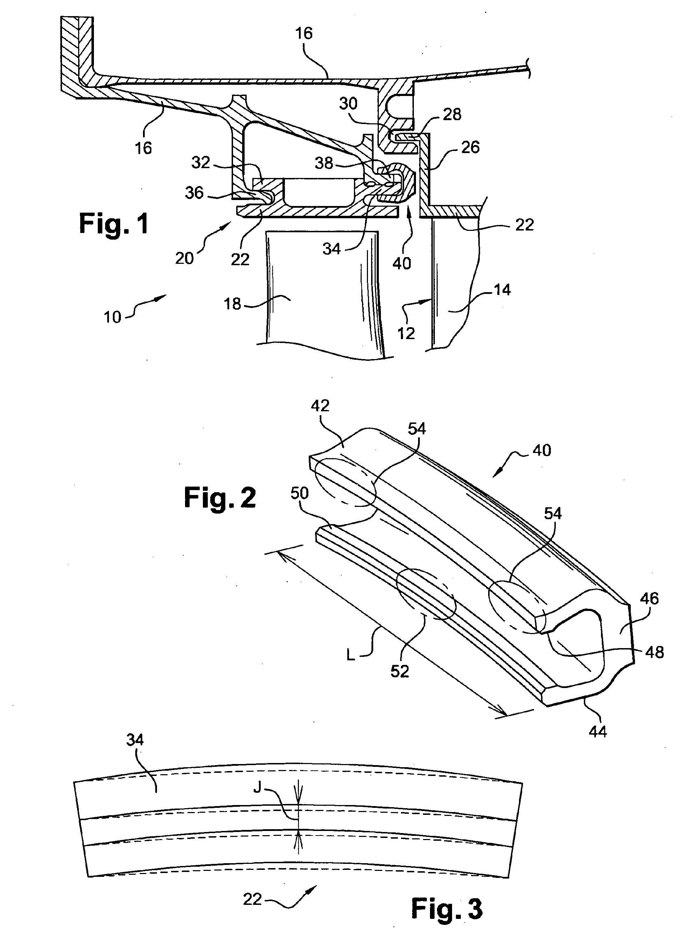

On se réfère d'abord à la figure 1 qui représente un étage de turbine 10 d'une turbomachine telle qu'un turboréacteur ou un turbopropulseur d'avion, cet étage 10 comprenant un distributeur 12 formé d'une rangée annulaire d'aubes fixes 14 portées par un carter 16 de la turbine, et un disque aubagé 18 monté en amont du distributeur 12 et tournant dans un anneau sectorisé 20 formé d'une pluralité de secteurs 22 qui sont accrochés circonférentiellement bout à bout sur le carter 16 de la turbine.

Le distributeur 12 comprend deux parois de révolution externe 24 et interne (non visible), respectivement, qui délimitent entre elles la veine annulaire d'écoulement des gaz dans la turbine et entre lesquelles s'étendent radialement les aubes 14. Les moyens de fixation du distributeur comprennent au moins une patte radiale amont 26 reliée à sa périphérie externe à un rebord cylindrique 28 orienté vers l'amont et destiné à être engagé dans une rainure annulaire 30 orientée vers l'aval du carter 16.

Chaque secteur d'anneau 22 comprend à ses extrémités amont et aval des rebords circonférentiels 32, 34 d'accrochage sur le carter 16 de la turbine. Les rebords circonférentiels amont 32 des secteurs d'anneau sont orientés vers l'amont et sont engagés sur un rebord cylindrique 36 orienté vers l'aval du carter 16. Les rebords circonférentiels aval 34 des secteurs sont orientés vers l'aval et sont radialement serrés sur un rail cylindrique 38 du carter au moyen de verrous 40 à section sensiblement en C dont l'ouverture est orientée axialement vers l'amont et qui sont engagés axialement depuis l'aval, par déformation élastique, sur le rail de carter 38 et les rebords circonférentiels aval 34 des secteurs d'anneau. Les rebords aval 34 des secteurs d'anneau et le rail 38 du carter ont sensiblement le même rayon de courbure au repose de la turbomachine.

Chaque verrou 40, mieux visible en figure 2, comprend deux parois parallèles circonférentielles 42 et 44, radialement externe et radialement interne respectivement, qui sont reliées entre elles à leurs extrémités aval par une paroi radiale 46, et qui sont engagées respectivement sur l'extérieur du rail de carter 38 et sur l'intérieur des rebords aval 34 des secteurs d'anneau.

La paroi radiale 46 du verrou 40 est interposée axialement entre les extrémités aval du rail 38 et des rebords 34, d'une part, et la paroi radiale 26 du distributeur 12 situé en aval, d'autre part, pour empêcher le verrou 40 de se déplacer axialement vers l'aval et de se désengager du rail de carter 38 et des rebords 34 des secteurs d'anneau.

Les parois externe 42 et interne 44 du verrou comprennent, du côté opposé à la paroi radiale 46, des moyens d'appui sur le rail de carter 38 et le rebord 34 du secteur, respectivement. La paroi externe 42 comprend une surface interne d'appui 48 sur le rail de carter 38, et la paroi interne 44 comprend une surface externe d'appui 50 sur le rebord 34 du secteur d'anneau, ces surfaces 48, 50 s'étendant sur toute la largeur L ou étendue angulaire du verrou 40.

Le verrou 40 est engagé sur le rail de carter 38 et sur le rebord circonférentiel 34 du secteur d'anneau avec une certaine précontrainte radiale. Pour cela, la distance en direction radiale entre les parois circonférentielles 42, 44 du verrou non monté (ce qui correspond à la dimension radiale de l'ouverture du verrou) est inférieure, par exemple de quelques dixièmes de millimètre environ, à la somme des épaisseurs en direction radiale du rail de carter 38 et du rebord aval 34 du secteur. Le verrou 40 se déforme donc élastiquement en direction radiale, par écartement de ses parois circonférentielles 42, 44, lors de son engagement axial sur le rail 38 et le rebord aval 34 du secteur. Dans la position de montage du verrou et au repos de la turbomachine, l'intégralité des surfaces 48, 50 est en appui sur le rail de carter 38 et sur le rebord 34 du secteur, respectivement.

En fonctionnement, le secteur d'anneau 22 est soumis à un gradient de température important en direction radiale, ce qui se traduit par un « décambrage » du secteur d'anneau qui a alors un rayon de courbure plus important qu'à l'état sans contrainte, son rayon de courbure devenant supérieur à celui du rail 38 du carter. On a représenté en figure 3 la forme et la position du rebord aval 34 du secteur d'anneau à l'état libre sans contrainte en traits continus, et à l'état « décambré » en traits pointillés. Le « décambrage » du secteur d'anneau provoque un déplacement radial J vers l'intérieur du rebord circonférentiel 34 du secteur d'anneau, ce déplacement J variant le long de la dimension circonférentielle du secteur et étant maximal au niveau de la partie médiane de ce secteur, ce qui entraîne une modification des zones d'appui radial entre le verrou 40 et le rail 38 et le rebord 34. La paroi interne 44 du verrou est en appui sur le rebord 34 du secteur d'anneau dans une zone 52 située au niveau de la partie médiane de cette paroi, et la paroi externe 42 du verrou est alors en appui sur le rail de carter 38 dans des zones 54 situées au niveau des parties d'extrémité de cette paroi 42. Les efforts transmis par le secteur d'anneau et le rail de carter transitent alors par une partie seulement des surfaces d'appui 48, 50 des parois du verrou, ce qui entraîne des concentrations de contraintes importantes sur les parties correspondantes du verrou qui ne sont pas adaptées pour résister à ces contraintes, et se traduit par une réduction de la durée de vie du verrou.

L'invention permet de remédier au moins partiellement à ces inconvénients au moyen d'un verrou dont les moyens d'appui sont localisés dans des parties prédéterminées de ses parois interne et externe, ces parties étant conçues pour rester constamment en contact avec le rebord du secteur d'anneau et le rail de carter.

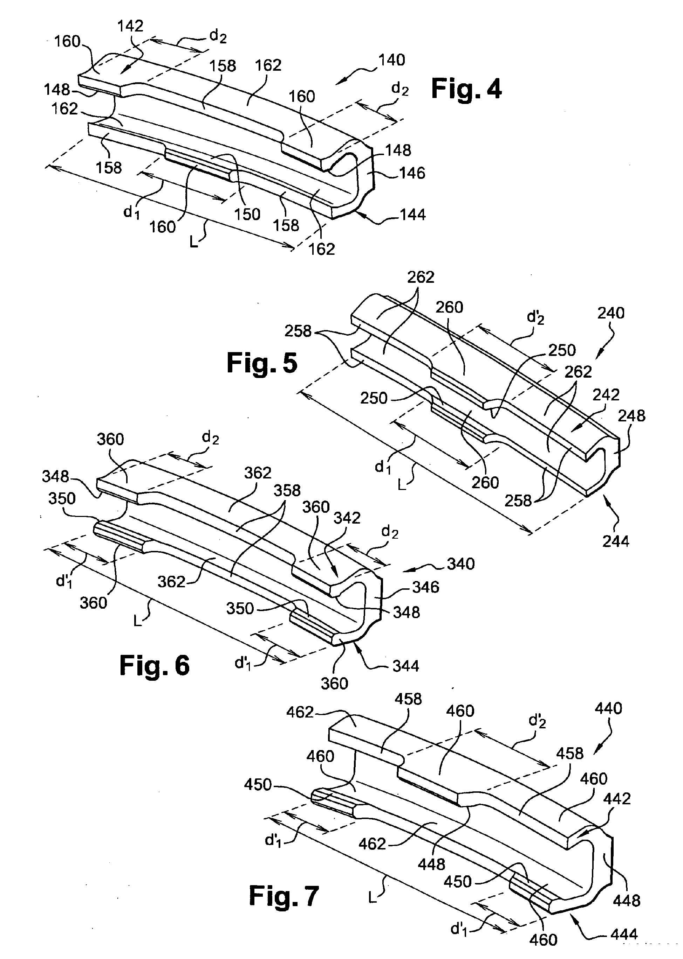

Dans l'exemple de réalisation représenté en figure 4, les parois 142, 144 du verrou comprennent, du côté opposé à la paroi radiale 146, des échancrures 158 qui s'étendent en direction circonférentielle sur une partie de la largeur L du verrou et qui délimitent des parties 160 de plus grande dimension en direction axiale et des parties 162 de plus petite dimension en direction axiale.

La paroi externe 142 du verrou 140 comprend sensiblement en son milieu une échancrure 158 qui forme une partie médiane 162 de plus faible dimension axiale, et qui sépare l'une de l'autre deux parties d'extrémité 160 de plus grande dimension axiale.

La paroi interne 144 du verrou comprend une échancrure 158 à chacune de ses extrémités de façon à former deux parties d'extrémité 162 de plus faible dimension axiale séparées l'une de l'autre par une partie médiane 160 de plus grande dimension axiale.

Les parties 160 de plus grande dimension axiale comprennent les moyens d'appui sur le rail de carter 38 et le rebord 34 du secteur d'anneau. La partie médiane 160 de la paroi interne 144 comprend une surface externe d'appui 150 qui s'étend sur toute la dimension en direction circonférentielle de cette partie et qui est destinée à être en contact avec la partie médiane du rebord 34 du secteur d'anneau. Chaque partie d'extrémité 160 de la paroi externe 142 comprend une surface interne d'appui 148 qui s'étend sur toute la dimension circonférentielle de cette partie et qui est destinée à être en contact avec une partie correspondante du rail de carter 38.

Dans l'exemple représenté, les échancrures 158 s'étendent le long des bords circonférentiels libres des parois 142, 144 du verrou et ont une profondeur en direction axiale relativement faible et qui est par exemple déterminée pour supprimer des parties correspondantes des surfaces d'appui du verrou 40 de la technique antérieure.

La partie médiane 160 de la paroi interne 144 du verrou s'étend par exemple sur une dimension d1 en direction circonférentielle qui représente environ le tiers de la largeur L du verrou. Les parties d'extrémité 160 de la paroi externe 142 du verrou s'étendent chacune sur une dimension d2 en direction circonférentielle qui représente environ le quart de la largeur L du verrou.

Dans cette configuration particulière des moyens d'appui des verrous 140 d'un étage, les surfaces d'appui 150 des parois internes 144 des verrous sont disposées en quinconce avec les surfaces d'appui 148 des parois externes 142 des verrous. De la matière est conservée au niveau des zones 52, 54 des parois du verrou 40 de la technique antérieure, ce qui assure un contact permanent des moyens d'appui sur le rail de carter et le rebord du secteur d'anneau, en fonctionnement de la turbomachine. Ces parties peuvent alors être conformées pour résister aux efforts transmis par le rebord et le rail. Les échancrures ont essentiellement pour but dans ce cas d'alléger le verrou. Elles permettent en outre de rendre le verrou plus souple en flexion de sorte que celui-ci puisse mieux suivre les déplacements du secteur d'anneau en fonctionnement.

Dans la variante de réalisation représentée en figure 5, la paroi interne 244 du verrou est identique à celle du verrou 140 de la figure 4.

La paroi externe 242 du verrou comprend une échancrure 258 à chacune de ses parties d'extrémité de façon à former deux parties d'extrémité de plus faible dimension axiale séparées l'une de l'autre par une partie médiane de la paroi 242 de plus grande dimension axiale.

La partie médiane 260 de la paroi interne 244 comprend une surface externe 250 d'appui sur la partie médiane du rebord 34 du secteur d'anneau, et la partie médiane 260 de la paroi externe 242 comprend une surface interne 250 d'appui sur une partie correspondante du rail de carter 38.

Les échancrures 258 de la paroi interne 244 du verrou sont sensiblement identiques aux échancrures de la paroi externe 242. Les parties médianes 260 des parois interne et externe du verrou ont chacune une dimension d1, d2' en direction circonférentielle qui représentent environ le tiers de la largeur L du verrou.

Dans la configuration de la figure 5, les moyens d'appui des verrous 140 d'un étage sont tels que les surfaces d'appui 250 des parois internes des verrous sont alignées radialement avec les surfaces d'appui 250 des parois externes des verrous et sont situées au niveau des parties médianes de ces verrous. Les parties médianes de chaque verrou qui sont engagées avec une certaine précontrainte radiale sur le rail de carter et sur le rebord du secteur d'anneau s'opposent en fonctionnement au décambrage des secteurs d'anneau et donc au déplacement radial vers l'intérieur de la partie médiane de ce secteur d'anneau. Les parties médianes du verrou sont donc dans ce cas conformées, et en particulier renforcées par rapport à la technique antérieure, pour résister aux contraintes transmises par le secteur d'anneau en fonctionnement.

Dans encore une autre variante représentée en figure 6, la paroi externe 342 du verrou 340 est identique à la paroi externe 148 du verrou 140 de la figure 4.

La paroi interne 344 de ce verrou comprend sensiblement en son milieu une échancrure 358 qui forme une partie médiane de plus faible dimension axiale, et qui sépare l'une de l'autre deux parties d'extrémité de plus grande dimension axiale.

Les parties 360 de plus grande dimension axiale comprennent les surfaces d'appui 348, 350 sur le rail de carter 38 et sur le rebord 34 du secteur d'anneau, respectivement.

Les parties d'extrémités 360 des parois 342, 344 du verrou ont chacune une dimension d1', d2 en direction circonférentielle qui représente environ le quart de la largeur L du verrou.

Dans cette configuration, les moyens d'appui et de serrage radial sont localisés sur les parties d'extrémité du secteur d'anneau et sur des parties correspondantes du rail de carter. La partie médiane du secteur d'anneau n'est donc pas en contact avec le verrou et peut se déplacer librement en direction radiale en fonctionnement de la turbomachine, sans transmettre de contraintes au verrou 340 qui a donc une durée de vie plus longue.

Comme dans le mode de réalisation de la figure 5, les surfaces d'appui 350 de la paroi interne du verrou sont également alignées radialement avec les surfaces d'appui 348 de la paroi externe. Les surfaces d'appui 348, 350 du verrou de la figure 6 sont au nombre de quatre contre deux pour le verrou de la figure 5.

Dans la variante de réalisation représentée en figure 7, la paroi externe 442 du verrou 440 est identique à la paroi externe 242 du verrou 240 de la figure 5, et sa paroi interne 444 est identique à la paroi interne 344 du verrou 340 de la figure 6.

Le verrou 440 a sensiblement lés mêmes propriétés que le verrou 340 de la figure 6. Les parois de ce verrou 440 ont des formes sensiblement contraires ou opposées à celles du verrou 140 de la figure 4.

La largeur L des verrous 140, 240, 340, 440 est sensiblement identique à celle du verrou 40 de la technique antérieure.

## Revendications

1. Etage de turbine ou de compresseur, en particulier de turbomachine, comprenant au moins un disque aubagé (18) entouré par un anneau sectorisé (20) porté par un carter (16) et comprenant un rebord circonférentiel (34) serré radialement sur un rail annulaire (38) du carter par des verrous (140) à section sensiblement en C qui sont engagés axialement sur le rail de carter et sur le rebord de l'anneau, chaque verrou comportant deux parois (144, 142) parallèles à orientation circonférentielle, respectivement interne et externe, reliées l'une à l'autre par une paroi radiale (146), les parois interne et externe du verrou comprenant des moyens (150, 148) d'appui radial respectivement sur le rebord de l'anneau et sur le rail de carter, **caractérisé en ce que** ces moyens d'appui s'étendent sur une partie seulement de la largeur ou de l'étendue angulaire des parois interne et externe du verrou.

2. Etage selon la revendication 1, **caractérisé en ce que** les parois interne et externe (142, 144) du verrou comprennent chacune au moins une partie (160) de plus grande dimension en direction axiale et au moins une partie (162) de plus petite dimension en direction axiale, la ou chaque partie de plus grande dimension comportant lesdits moyens d'appui radial (148, 150).

3. Etage selon la revendication 2, **caractérisé en ce que** la paroi interne du verrou comprend une partie médiane de plus faible dimension axiale et des parties d'extrémité de plus grande dimension axiale, ou une partie médiane (160) de plus grande dimension axiale et des parties d'extrémité (162) de plus faible dimension axiale.

4. Etage selon la revendication 2 ou 3, **caractérisé en ce que** la paroi externe du verrou comprend une partie médiane de plus grande dimension axiale et des parties d'extrémité de plus petite dimension axiale, ou une partie médiane (162) de plus faible dimension axiale et des parties d'extrémité (160) de plus grande dimension axiale.

5. Etage selon l'une des revendications 2 à 4, **caractérisé en ce que** la ou chaque partie (160) de plus grande dimension axiale de chaque paroi du verrou a une largeur ou étendue angulaire qui représente environ la moitié de celle du verrou (140).

6. Etage selon l'une des revendications 2 à 4, **caractérisé en ce que** la ou chaque partie (160) de plus grande dimension axiale de chaque paroi du verrou a une largeur ou étendue angulaire qui représente environ le tiers de celle du verrou (140).

7. Etage selon l'une des revendications 2 à 4, **caractérisé en ce que** la ou chaque partie (160) de plus grande dimension axiale de chaque paroi du verrou a une largeur ou étendue angulaire qui représente environ le quart de celle du verrou (140).

8. Etage selon l'une des revendications 2 à 7, **caractérisé en ce que** les parties (162) de plus faible dimension axiale des parois du verrou sont formées par des échancrures (158) de ces parois.

9. Compresseur ou turbine de turbomachine, **caractérisé(e) en ce qu**'il ou elle comprend au moins un étage de turbine ou de compresseur selon l'une des revendications précédentes.

10. Turbomachine, telle qu'un turboréacteur ou un turbopropulseur d'avion, **caractérisée en ce qu'**elle comprend au moins un étage de turbine ou de compresseur selon l'une des revendications 1 à 7.

11. Verrou (140) pour un étage de turbine ou de compresseur selon l'une des revendications 1 à 7, comprenant deux parois (144, 142) parallèles à orientation circonférentielle, respectivement interne et externe, reliées l'une à l'autre à l'un de leurs bords circonférentiels par une troisième paroi (146) sensiblement radiale de façon à ce que le verrou ait en section une forme sensiblement en C, **caractérisé en ce que** les parois interne et externe comprennent chacune au niveau de l'autre de leurs bords circonférentiels au moins une échancrure (158) qui s'étend en direction circonférentielle sur au moins un quart de la largeur ou de l'étendue angulaire du verrou, les parties non échancrées (160) de ces parois comportant des moyens d'appui radial (148, 150).

## Claims

1. A stage of a turbine or compressor, particularly for a turbomachine, comprising at least a vane disk (18) surrounded with a sectorised ring (20) supported by a housing (16) and comprising a circumferential flange (34) radially clamped on an annular rail (38) of the housing by substantially C shaped cross-section locks (140) which are axially engaged on the housing rail and the ring's flange, each lock having two circumferentially directed parallel walls (144, 142), respectively inner and outer, connected together by a radial wall (146), the inner and outer walls of the lock comprising radial bearing means (150, 148) on the ring's flange and the housing rail, respectively, **characterized in that** those bearing means only extend on a part of the width or angular extent of the inner and outer walls of the lock.

2. A stage according to claim 1, **characterized in that** the inner and outer walls (142, 144) of the lock each comprise at least one portion (160) of greater dimension in an axial direction and at least one portion (162) of smaller dimension in an axial direction, the, or each, portion of greater dimension having said radial bearing means (148, 150).

3. A stage according to claim 2, **characterized in that** the inner wall of the lock comprises a median portion of smaller axial dimension and end portions of greater axial dimension, or a median portion (160) of greater axial dimension and end portions (162) of smaller axial dimension.

4. A stage according to claim 2 or 3, **characterized in that** the outer wall of the lock comprises a median portion of greater dimension and end portions of smaller axial dimension, or a median portion (162) of smaller axial dimension and end portions (160) of greater axial dimension.

5. A stage according to any one of claims 2 to 4, **characterized in that** the, or each, portion (160) of greater axial dimension of each wall of the lock has a width or angular extent which makes up about the half of that of the lock (140).

6. A stage according to any one of claims 2 to 4, **characterized in that** the, or each, portion (160) of greater axial dimension of each wall of the lock has a width or angular extent which makes up about the third of that of the lock (140).

7. A stage according to any one of claims 2 to 4, **characterized in that** the, or each, portion (160) of greater axial dimension of each wall of the lock has a width or angular extent which makes up about the quarter of that of the lock (140).

8. A stage according to any one of claims 2 to 7, **characterized in that** the portions (162) of smaller axial dimension of the walls of the lock are formed by serrations (158) of those walls.

9. A compressor or turbine for a turbomachine, **characterized in that** it comprises at least one stage of turbine or compressor according to claim 1.

10. A turbomachine such as a plane turbojet or turbojet prop, **characterized in that** it comprises at least one stage of turbine or compressor according to any one of claims 1 to 7.

11. A lock (140) for a stage of a turbine or a compressor according to any one of claims 1 to 7, comprising two circumferentially directed parallel walls (144, 142), respectively inner and outer, connected together at one circumferential edge thereof by a third substantially radial wall (146) so that the lock has a substantially C shaped cross-section, **characterized in that** the inner and outer walls each comprise at least one serration (158) at the other of their circumferential edges thereof, which extends along at least a quarter of the width or angular extent of the lock in a circumferential direction, the non-serrated portions (160) of those walls having radial bearing means (148, 150).

## Patentansprüche

1. Turbinen- bzw. Verdichterstufe, insbesondere Turbomaschinenstufe, mit zumindest einer Schaufelscheibe (18), die von einem in Sektoren unterteilten Ring (20) umgeben wird, der von einem Gehäuse (16) abgestützt wird und eine Umfangskante (34) aufweist, die radial an eine ringförmige Schiene (38) des Gehäuses mittels Riegel (140) mit im wesentlichen C-förmigem Querschnitt angedrückt wird, die axial an die Gehäuseschiene und an die Kante des Rings angebracht sind, wobei jeder Riegel zwei in Umfangsrichtung und parallel verlaufende Wände (144, 142), nämlich eine innere und eine äußere, aufweist, die über eine radial verlaufende Wand (146) miteinander verbunden sind, wobei die Innen- und die Außenwand des Riegels Abstützmittel (150, 148) zur radialen Abstützung an der Kante des Rings bzw. an der Gehäuseschiene aufweisen, **dadurch gekennzeichnet, dass** diese Abstützmittel sich nur über einen Teil der Breite bzw. der Winkelausdehnung der Innen- und der Außenwand des Riegels erstrecken.

2. Stufe nach Anspruch 1, **dadurch gekennzeichnet, dass** die Innen- und die Außenwand (142, 144) des Riegels jeweils zumindest einen in axialer Richtung größer bemessenen Abschnitt (160) und zumindest einen in axialer Richtung kleiner bemessenen Abschnitt (162) aufweisen, wobei der bzw. jeder größer bemessene Abschnitt die radialen Abstützmittel (148, 150) aufweist.

3. Stufe nach Anspruch 2, **dadurch gekennzeichnet, dass** die Innenwand des Riegels einen axial kleiner bemessenen Mittelabschnitt und axial größer bemessene Endabschnitte aufweist bzw. einen axial größer bemessenen Mittelabschnitt (160) und axial kleiner bemessene Endabschnitte (162) aufweist.

4. Stufe nach Anspruch 2 oder 3, **dadurch gekennzeichnet, dass** die Außenwand des Riegels einen axial größer bemessenen Mittelabschnitt und axial kleiner bemessene Endabschnitte bzw. einen axial kleiner bemessenen Mittelabschnitt (162) und axial größer bemessene Endabschnitte (160) aufweist.

5. Stufe nach einem der Ansprüche 2 bis 4, **dadurch gekennzeichnet, dass** der bzw. jeder axial größer bemessene Abschnitt (160) einer jeden Wand des Riegels eine Breite bzw. Winkelausdehnung hat, die etwa die Hälfte von derjenigen des Riegels (140) ausmacht.

6. Stufe nach einem der Ansprüche 2 bis 4, **dadurch gekennzeichnet, dass** der bzw. jeder axial größer bemessene Abschnitt (160) einer jeden Wand des Riegels eine Breite bzw. Winkelausdehnung hat, die etwa ein Drittel von derjenigen des Riegels (140) ausmacht.

7. Stufe nach einem der Ansprüche 2 bis 4, **dadurch gekennzeichnet, dass** der bzw. jeder axial größer bemessene Abschnitt (160) einer jeden Wand des Riegels eine Breite bzw. Winkelausdehnung hat, die etwa ein Viertel von derjenigen des Riegels (140) ausmacht.

8. Stufe nach einem der Ansprüche 2 bis 7, **dadurch gekennzeichnet, dass** die axial kleiner bemessenen Abschnitte (162) der Wände des Riegels von Aussparungen (158) dieser Wände gebildet werden.

9. Verdichter bzw. Turbine einer Turbomaschine, **dadurch gekennzeichnet dass** er bzw. sie zumindest eine Turbinen- bzw. Verdichterstufe nach einem der vorangehenden Ansprüche aufweist.

10. Turbomaschine, wie etwa Turbostrahltriebwerk oder Turbopropellertriebwerk für Flugzeuge, **dadurch gekennzeichnet, dass** sie zumindest eine Turbinen- bzw. Verdichterstufe nach einem der Ansprüche 1 bis 7 aufweist.

11. Riegel (140) für eine Turbinen- bzw. Verdichterstufe nach einem der Ansprüche 1 bis 7, enthaltend zwei in Umfangsrichtung und parallel verlaufende Wände (144, 142), nämlich eine innere und eine äußere, die an einem ihrer Umfangsränder über eine im wesentlichen radial verlaufende dritte Wand (146) miteinander verbunden sind, derart, dass der Riegel einen im wesentlichen C-förmigen Querschnitt hat, **dadurch gekennzeichnet, dass** die Innen- und die Außenwand jeweils im Bereich ihres anderen Umfangsrandes zumindest eine Aussparung (158) aufweisen, die sich zumindest über ein Viertel der Breite bzw. der Winkelausdehnung des Riegels in Umfangsrichtung erstrecken, wobei die nicht ausgesparten Abschnitte (160) dieser Wände radiale Abstützmittel (148, 150) aufweisen.
